# EUROPEAN PATENT APPLICATION

(11) **EP 2 239 231 A1**
(43) Date of publication of application: **13.10.2010**
(21) Application number: 08862945.6
(22) Date of filing: 04.12.2008
(51) Int. Cl.: C02F 1/46

(54) **ELECTROLYZED WATER PRODUCTION SYSTEM**

(30) Priority: 14.12.2007 JP 2007323867
(71) Applicant: Hoshizaki Denki Kabushiki Kaisha, Toyoake-shi Aichi 470-1194 (JP)
(72) Inventor: FUJITA, Masahiro, Toyoake-shi Aichi 470-1194 (JP); UKAI, Yoshiyuki, Toyoake-shi Aichi 470-1194 (JP); SHIMIZU, Yoichiro, Toyoake-shi Aichi 470-1194 (JP)
(74) Representative: Kramer - Barske - Schmidtchen
(86) International application number: PCT/JP2008/072018
(87) International publication number: WO 2009/078278

(57) **Abstract**

An electrolyzed water production apparatus includes an electrolytic cell to be supplied with diluted brine prepared by mixture of thick brine from a brine tank with fresh water from a source of water and a current detector for detecting an electrolytic current of the diluted brine caused by a predetermined voltage applied to a set of electrodes in the electrolytic cell, wherein the supply amount of thick brine to be mixed with the fresh water is adjusted under feed-back control so that the electrolytic current of the diluted brine becomes a predetermined value. The electrolyzed water production apparatus further includes control means to temporarily discontinue adjustment of the supply amount of the thick brine under the feed-back control when an electrolytic condition of the diluted brine has been changed and to adjust the supply amount of the thick brine in accordance with changing factors of the electrolytic condition, whereby after the electrolytic current of the diluted brine was maintained at the predetermined value under control of the control means, the adjustment of the supply amount of the thick brine is resumed under the feed-back control.

## Description

### Field of the Invention

The present invention relates to an electrolyzed water production apparatus, and more particularly to an electrolyzed water production apparatus of the type, which comprises an electrolytic cell to be supplied with diluted brine prepared by mixture of thick brine with fresh water from a source of water and applied with a predetermined voltage at its electrodes for producing electrolyzed water in the electrolytic cell.

### Discussion of the Prior Art:

Disclosed in Japanese Patent Laid-open Publication Heisei 11(1999)-114565 is an electrolyzed water production apparatus which comprises an electrolytic cell to be supplied with diluted brine prepared by mixture of thick brine with fresh water from a source of water and current detection means for detecting an electrolytic current of the diluted brine caused by a predetermined voltage applied to a set of electrodes in the electrolytic cell, wherein the supply amount of thick brine to be mixed with the fresh water is adjusted under feed-back control so that the electrolytic current of the diluted brine detected by the current detection means becomes a predetermined value. In a conventional electrolyzed water production apparatus of this kind, the electrolytic current of the diluted brine is controlled to produce electrolyzed water of a desired characteristic in the electrolytic cell.

### Problems to be solved:

In use of the electrolyzed water production apparatus, the electrolytic current in the electrolytic cell is greatly fluctuated due to increase or decrease of the supply amount of fresh water, rise or drop of the water temperature or change of the desired characteristic of electrolyzed water. This causes lapse of a considerable time until the electrolytic current in the electrolytic cell becomes a predetermined value under the feed-back control. During such lapse of the time, electrolyzed water of a desired characteristic may not be produced. If the electrolytic condition of the water is greatly changed, an excessive electrolytic current will occur in the electrolytic cell. This causes defect or obstacles of the component parts of the electrolyzed water production apparatus and causes useless consumption of thick brine.

### SUMMARY OF THE INVENTION

For solution of the problems, an object of the present invention is directed to provide an electrolyzed water production apparatus wherein the supply amount of thick brine to be mixed with fresh water is controlled in accordance with change of the electrolytic condition of the diluted brine so that the electrolytic current is rapidly controlled to the predetermined value.

According to the present invention, the object is attained by providing an electrolyzed water production apparatus which comprises an electrolytic cell to be supplied with diluted brine prepared by mixture of thick brine from a brine tank with fresh water from a source of water and current detection means for detecting an electrolytic current of the diluted brine caused by a predetermined voltage applied to a set of electrodes in the electrolytic cell, wherein the supply amount of thick brine to be mixed with the fresh water is adjusted under feed-back control so that the electrolytic current of the diluted brine detected by the current detection becomes a predetermined value, **characterized in that** the electrolyzed water production apparatus further includes control means to temporarily discontinue adjustment of the supply amount of the thick brine under the feed-back control when an electrolytic condition of the diluted brine has been changed and to adjust the supply amount of the thick brine in accordance with changing factors of the electrolytic condition, whereby after the electrolytic current of the diluted brine was maintained at the predetermined value under control of the control means, the adjustment of the supply amount of the thick brine is resumed under the feed-back control.

In a practical embodiment of the present invention, a flow quantity variable pump is used to supply the thick brine from the brine tank into a fresh water supply conduit. In such an embodiment, and the number of strokes of the pump per a unit-time may be controlled in accordance with the changing factors of the electrolytic condition under control of the control means. When a changing factor of the electrolytic condition is a supply amount of fresh water, the supply amount of the thick brine may be adjusted in accordance with change of the supply amount of the fresh water under control of the control means. When a changing factor of the electrolytic condition is a temperature of the fresh water, the supply amount of the thick brine may be adjusted in accordance with change of the water temperature under control of the control means. When a variation factor of the electrolytic condition is a setting value of the electrolytic current of diluted brine, the supply amount of thick brine may be adjusted in accordance with change of the setting value of electrolytic current under control of the control means.

In use of the electrolyzed water production apparatus described above, the supply amount of the thick brine is adjusted in accordance with changing factors of the electrolytic condition such as increase or decrease of the supply amount of fresh water for adjustment of the production amount of electrolyzed water, change of the fresh water temperature, or change of the setting value of the electrolytic current for adjustment of the characteristic (pH) of electrolyzed water. This is effective to rapidly control the electrolytic current of the diluted brine to a predetermined value in spite of change of the electrolytic condition during control of the supply amount of thick brine under the feed-back control thereby to restrain the occurrence of an excessive current in the electrolytic cell without causing useless consumption of brine.

### DESCRIPTION OF THE PREFERRED EMBODIMENT

As shown in Fig, 1, an electrolyzed water production apparatus of the present invention comprises an electrolytic cell 10 with a partition membrane, a diluted brine preparation device 20 and an electric controller 30. As is well known in the art, the electrolytic cell 10 has a housing 11 the interior of which is subdivided into a pair of electrolytic chambers R1, R2 by means of a partition membrane 12. A set of electrodes 13a, 13b is disposed within the electrolytic chambers R1, R2. The electrolytic chambers R1, R2 of electrolytic cell 10 are connected at their upstream-side portions with a bifurcated portion of a conduit 14 for supply of diluted brine. The electrolytic chambers R1, R2 are connected at their downstream-side portions with upstream-side discharge conduits 15a, 15b for discharge of electrolyzed water. The upstream-side discharge conduits 15a, 15b are connected to downstream-side discharge conduit 15a2, 15b2 through a flow changeover valve 16.

In operation of the electrolyzed water production apparatus, each polarity of electrodes 13a, 13b in chambers R1, R2 is periodically inverted, and the flow changeover valve 16 is switched over in response to inversion of the polarity to discharge electrolyzed acid water and alkaline water selectively through the downstream-side discharge conduit 15a2 or 15b2. In operation, the diluted brine supplied to the electrolytic chambers R1, R2 is electrolyzed by an electrolytic current caused by a predetermined voltage applied to the electrodes 13a, 13b from a source of electricity 31 under control of the controller 30. When the polarity of electrode 13a is positive while the polarity of electrode 13b is negative in the electrolytic operation, electrolyzed acid water produced in chamber R1 is discharged through the discharge conduits 15a1 and 15a2, while electrolyzed alkaline water produced in chamber R2 is discharged through the discharge conduits 15b1 and 15b2. When the flow changeover valve 16 is switched over in response to inversion of each polarity of electrodes 13a, 13b under control of the controller 30, electrolyzed alkaline water produced in cathode chamber R1 is discharged through the discharge conduits 15a1 and 15b2, while electrolyzed acid water produced in anode chamber R2 is discharged through the discharge conduits 15b1 and 15a2. The value of electrolytic current of diluted brine in the electrolytic operation is measured by a current detector 33 in connection to a current divider 32 disposed in a wiring for connecting the electrodes 13b to the source of electricity 31. The electrolytic current of diluted brine measured by the current detector 33 changes in accordance with the conductivity of the diluted brine supplied to the electrolytic cell 10.

The diluted brine preparation device 20 for adjusting the concentration of diluted brine to be supplied to the electrolytic cell 10 comprises a brine tank 21 for storing an amount of high concentration brine such as saturated brine and a brine pump 23 of the variable discharge type disposed in a brine supply conduit 22 for supplying the thick brine from tank 21. The brine supply conduit 22 is connected to a water supply conduit 17 in connection to the source of fresh water. The saturated brine of high concentration is prepared by mixture of an amount of fresh water and a large amount of salt stored in the brine tank 21. The brine pump 23 has a diaphragm piston that is reciprocated to alternatively open and close a suction check valve and a discharge check valve thereby to discharge a predetermined amount of thick brine to be mixed with fresh water flowing through the water supply conduit 17. In this embodiment, the brine pump 23 is operated at a stroke of about 0.5 ∼ 1.0mm to discharge thick brine of about 0.06cc. The number of strokes per a unit time is adjusted in an extent of 0 ∼ 720 times per minute under control of the controller 30. When the thick brine in tank 21 was consumed by an electrolytic operation, the brine tank 21 is replaced with a brine tank filled with an amount of newly prepared thick brine.

When the brine pump 23 is driven under control of the controller 30 to supply the thick brine into the water supply conduit 17 from the brine tank 21, the tap water supplied from the source of fresh water is treated by a water softening device 18a disposed in the water supply conduit 17 and introduced into the diluted brine supply conduit 14 through a water purifier 18b. Thick brine pumped up by operation of pump 23 from brine tank 21 is supplied to the water supply conduit 17 and diluted by mixture with fresh water from the water supply conduit 17. Thus, the diluted brine is supplied into the electrolytic chambers R1, R2 through the diluted brine conduit 14. The conductivity of diluted brine electrolyzed in chambers R1, R2 changes in accordance with the conductivity of the fresh water and an amount of thick brine mixed with the fresh water as described later. Disposed in an intermediate portion of the water supply conduit 17 are a temperature sensor 18c and a flow quantity sensor 18d. The temperature sensor 18c detects a temperature of fresh water flowing through the water supply conduit 17, and the flow quantity sensor 18d detects an amount of fresh water flowing through the water supply conduit 17.

The controller 30 is in the form of a microcomputer programmed to apply a predetermined value to the electrodes 13a, 13b in the electrolytic cell 10 and to periodically invert the polarity of the voltage applied to the electrodes. In a condition where the electrodes 13a, 13b have been applied with the predetermined voltage, the controller 30 is applied with a detection signal indicative of an electrolytic current of the diluted brine detected by the current detector 33 to control the operation of brine pump 23 in such a manner that the electrolytic current of the diluted brine becomes the predetermined value under feed-back control. Thus, the diluted brine introduced into the electrolytic cell 10 is electrolyzed by the predetermine current to produce electrolyzed acid water and alkaline water of the desired characteristics.

In use of the electrolyzed water production apparatus, the electrolytic current in the electrolytic cell is greatly fluctuated due to increase or decrease of the supply amount of fresh water, rise or drop of the water temperature or change of the desired characteristic of electrolyzed water. This causes lapse of a considerable time until the electrolytic current in the electrolytic cell becomes the predetermined value under the feedback control. During such lapse of the time, electrolyzed water of a desired characteristic may not be produced. If the electrolytic condition of the diluted brine is greatly fluctuated, an excessive electrolytic current will occur in the electrolytic cell. This causes defect or obstacles of the component parts of the electrolyzed water production apparatus and causes useless consumption of thick brine.

For solution of such problems described above, the electrolyzed water production apparatus of the present invention includes control means to temporarily discontinue adjustment of the supply amount of thick brine under the feed-back control when an electrolytic condition of diluted brine has been changed and to adjust the supply amount of thick brine in accordance with the changing factors of the electrolytic condition, whereby after the electrolytic current of the diluted brine was maintained at the predetermined value under control of the control means, the adjustment of the supply amount of thick brine is resumed under the feed-back control.

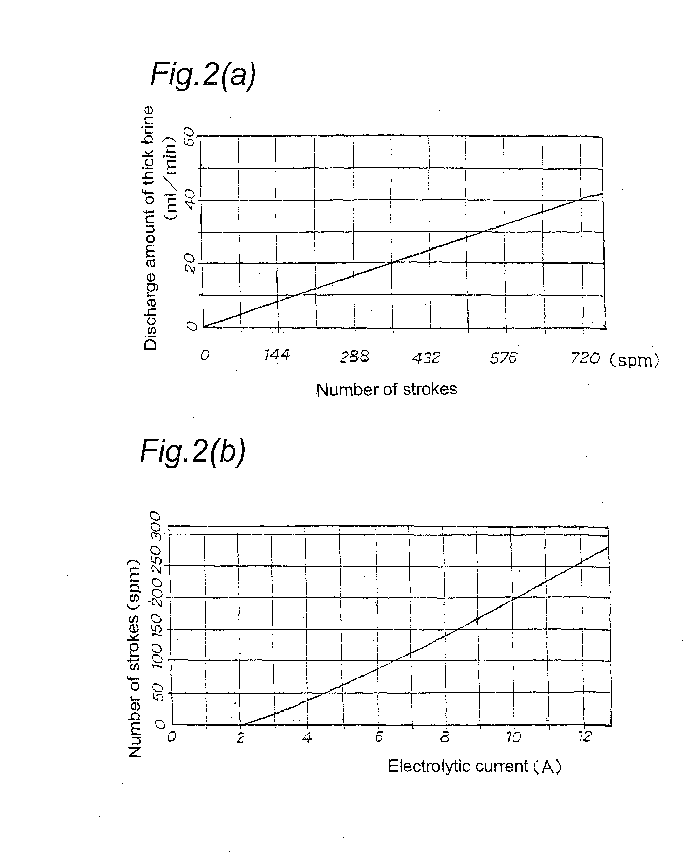

In the embodiment of the present invention, the supply amount of thick brine to be mixed with the fresh water from the source of water is adjusted on a basis of the number of strokes of brine pump 23 per a unit time under control of the controller 30. A graph of Fig. 2(a) shows a discharge amount of thick brine in relation to the number of strokes of the brine pump 23 per a unit time, and a graph of Fig. 2(b) shows an electrolytic current in the electrolytic cell in relation to the number of strokes of the brine pump 23 per a unit time. As is shown in the graph of Fig. 2(b), an electrolytic current of about 2A appears in the electrolytic cell even when the number of strokes of the brine pump 23 is zero. This phenomenon is caused by the conductivity of fresh water (tap water) supplied from the source of water.

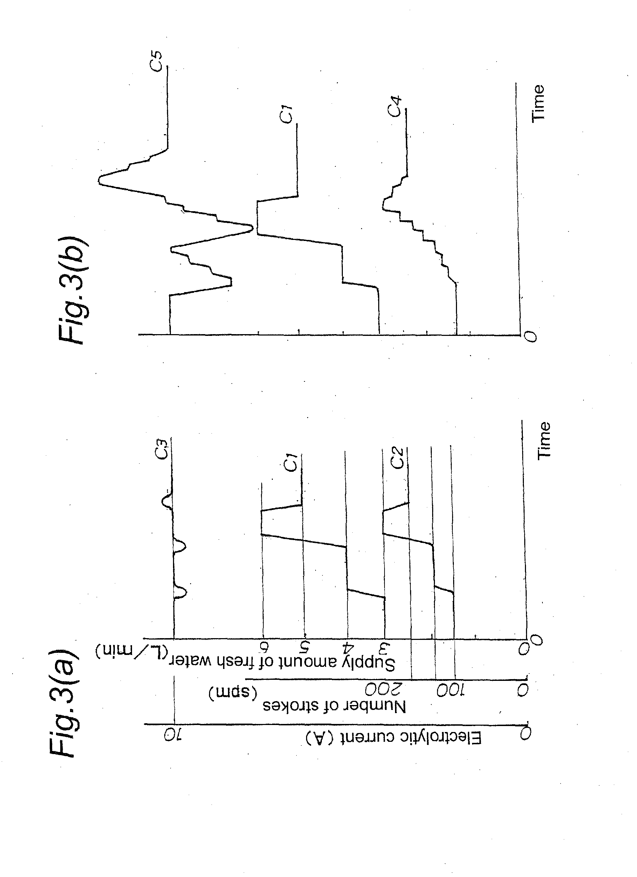

In Fig. 3(a), a graph C1 illustrates a condition where the supply amount of fresh water increases from 3L/min to 4L/min and from 4L/min to 6L/min respectively in accordance with a used amount of electrolyzed water and a condition where the supply amount of fresh water decreases from 6L/min to 5L/min. In such conditions, the number of strokes of the brine pump 23 is adjusted under control of the controller 30 as shown by a graph C2 in Fig. 3(a) to maintain the electrolytic current (A) at the predetermined value as shown by a graph C3 in Fig. 3(a). In contrast with such control of the brine pump 23, if the number of strokes of brine pump 23 was adjusted on a basis of an electrolytic current in the electrolytic cell under conventional feed-back control as shown by a graph C4 in Fig. 3(b), the electrolytic current (A) would be greatly fluctuated as shown by a graph C5 in Fig. 3(b), resulting in the occurrence of an excessive current in an unstable condition. In such an instance, a considerable time will lapse until the electrolytic current is controlled to the predetermined value and maintained at the same value.

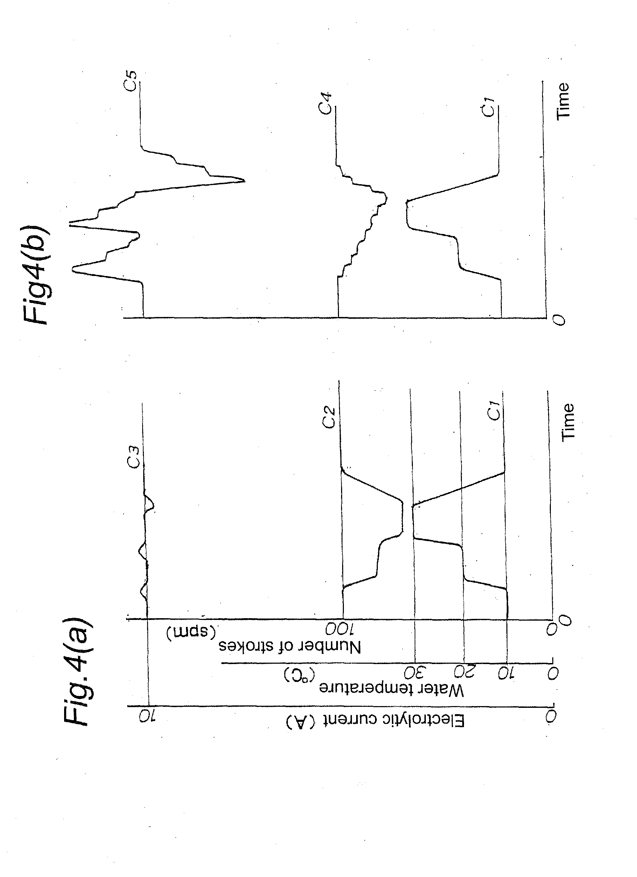

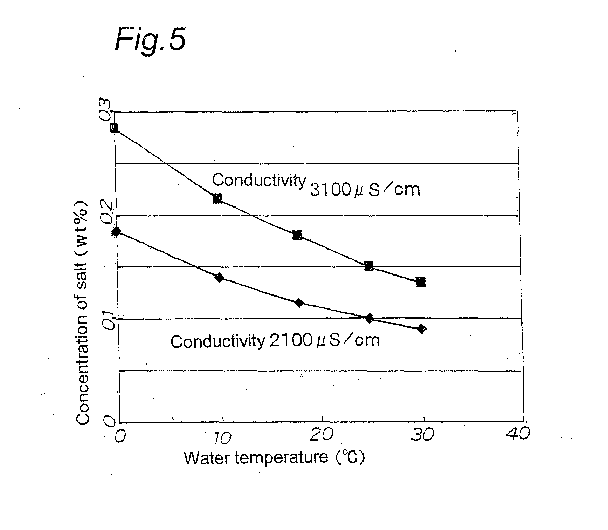

In Fig. 4(a), a graph C1 illustrates a condition where the temperature of fresh water rises from 10°C to 20°C, from 20°C to 30°C and lowers from 30°C to 10°C. In such a condition, the electrolytic current will greatly fluctuate due to change of the water temperature. It is, therefore, required to adjust the concentration of the diluted brine in accordance with the water temperature as shown in Fig. 5, thereby to maintain the conductivity of fresh water at a constant value (for instance, 3100 µS/cm or 2100 µS/cm). In such an instance, the number of strokes of brine pump 23 is adjusted under control of the controller as shown by a graph C2 in Fig. 4(a) to maintain the electrolytic current (A) at the predetermined value as shown by a graph C3 in Fig. 4(a). In contrast with such control of the brine pump 23, if the number of strokes of brine pump 23 was adjusted on a basis of an electrolytic current in the electrolytic cell under conventional feed-back control as shown by a graph C4 in Fig.4 (b), the electrolytic current (A) would be greatly fluctuated in accordance with change of the water temperature as shown by a graph C5 in Fig. 4(b), resulting in the occurrence of an excessive current in a unstable condition. In such an instance, a considerable time will lapse until the electrolytic current is controlled to the predetermined value and maintained at the same value.

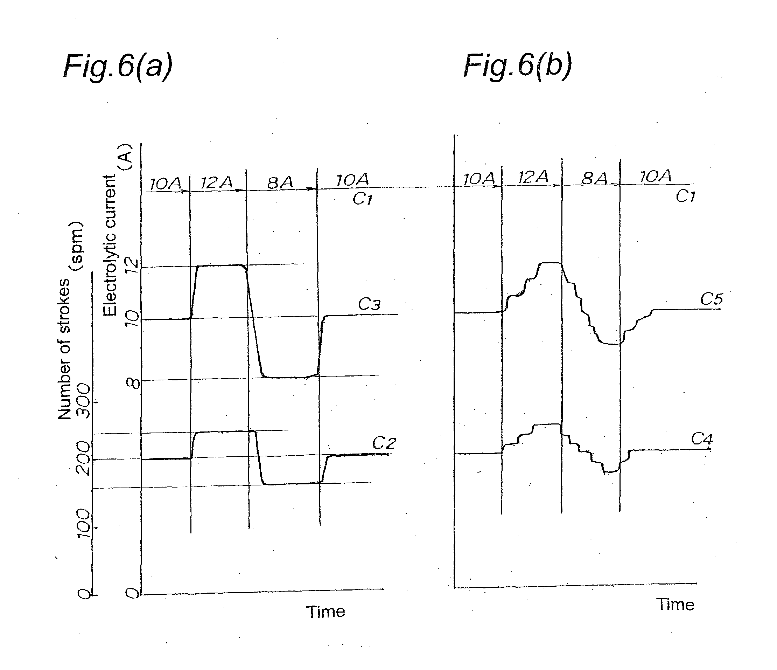

In Fig. 6(a), a graph C1 illustrates a condition where the setting value of the electrolytic current is changed from 10A to 12A, from 12A to 8A and from 8A to 10A for adjustment of the characteristic of electrolyzed water. In such a condition, the number of strokes of brine pump 23 is adjusted under control of the controller as shown by a graph C2 in Fig. 6 (a) to maintain the electrolytic current (A) at the setting value as shown by a graph C3 in Fig. 6 (a). In contrast with such control of the brine pump 23, if the number of strokes of brine pump 23 was adjusted on a basis of an electrolytic current in the electrolytic cell under conventional feed-back control as shown by a graph C4 in Fig. 6 (b), the electrolytic current (A) would be greatly fluctuated as shown by a graph C5 in Fig. 6 (b), resulting in the occurrence of an excessive current in a unstable condition during a considerable time until the electrolytic current is controlled to the setting value.

### BRIEF DESCRIPTION OF THE DRAWINGS

In the drawings,

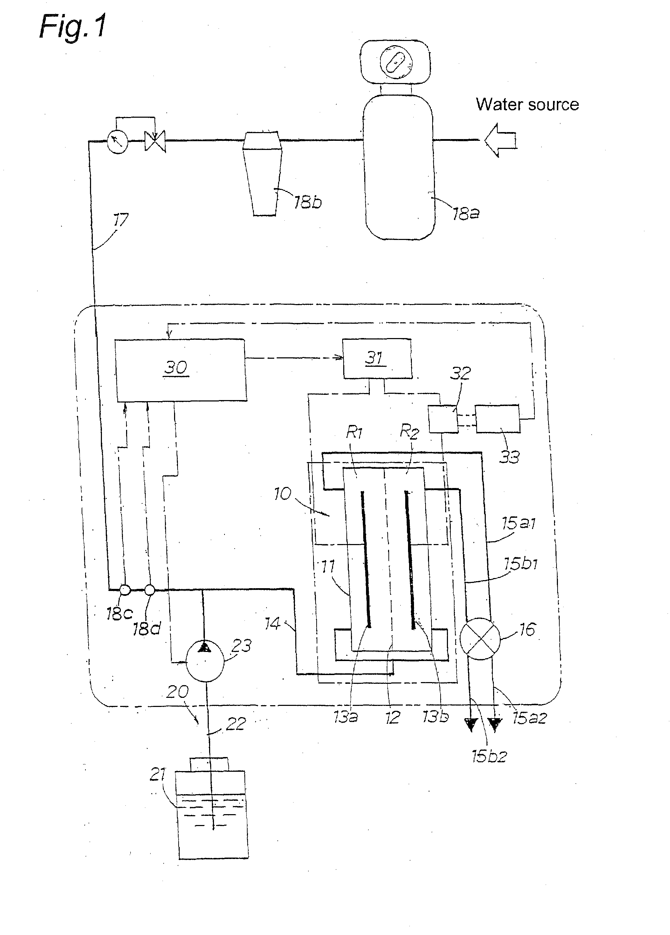

Fig. 1 is a schematic illustration of an electrolyzed water production apparatus in accordance with the present invention,
Fig. 2 (a) is a graph showing a discharge amount of thick brine in relation to the number of strokes of a brine pump per a unit time,
Fig. 2(b) is a graph showing the number of strokes of the brine pump in relation to an electrolytic current (A) in an electrolytic cell shown in Fig. 1,
Fig. 3(a) is a graph illustrating an electrolytic current maintained under control of the number of strokes of the brine pump effected in accordance with change of a supply amount of fresh water,
Fig. 3(b) is a graph illustrating an electrolytic current fluctuated under control of conventional feed-back control effected in accordance with change of the supply amount of fresh water,
Fig. 4(a) is a graph illustrating an electrolytic current maintained under control of the number of strokes of the brine pump effected in accordance with change of the temperature of fresh water,
Fig. 4 (b) is a graph illustrating an electrolytic current under control of conventional feed-back control effected in accordance with change of the temperature of fresh water,
Fig. 5 is a graph showing the concentration of diluted brine adjusted in accordance with the temperature of fresh water to maintain the electrolytic current at a predetermined value,
Fig. 6 (a) is a graph illustrating change of an electrolytic current in relation to the number of strokes controlled in accordance with change of a setting value of the electrolytic current, and
Fig. 6 (b) is a graph illustrating fluctuation of the electrolytic current under control of conventional feedback control effected in accordance with the setting value of the electrolytic current.

## Claims

1. An electrolyzed water production apparatus comprising an electrolytic cell to be supplied with diluted brine prepared by mixture of thick brine from a brine tank with fresh water from a source of water and current detection means for detecting an electrolytic current of the diluted brine caused by a predetermined voltage applied to a set of electrodes in the electrolytic cell, wherein the supply amount of thick brine to be mixed with the fresh water is adjusted under feed-back control so that the electrolytic current of the diluted brine detected by the current detection becomes a predetermined value,
**characterized in that** the electrolyzed water production apparatus further includes control means to temporarily discontinue adjustment of the supply amount of the thick brine under the feed-back control when an electrolytic condition of the diluted brine has been changed and to adjust the supply amount of the thick brine in accordance with changing factors of the electrolytic condition, whereby after the electrolytic current of the diluted brine was maintained at the predetermined value under control of the control means, the adjustment of the supply amount of the thick brine is resumed under the feed-back control.

2. An electrolyzed water production apparatus as claimed in claim 1, wherein a flow quantity variable pump is used to supply the thick brine from the brine tank into a fresh water supply conduit, wherein means for controlling the number of strokes of the pump per a unit-time in accordance with changing factors of the electrolytic condition is provided as the control means for control of the supply amount of thick brine.

3. An electrolyzed water production apparatus as claimed in claim 1, wherein the supply amount of the thick brine is adjusted in accordance with change of the supply amount of fresh water under said control means when a changing factor of the electrolytic condition is the supply amount of fresh water.

4. An electrolyzed water production apparatus as claimed in claim 1, wherein the supply amount of the thick brine is adjusted in accordance with change of the temperature of fresh water under said control means when a changing factor of the electrolytic condition is the temperature of fresh.

5. An electrolyzed water production apparatus as claimed in claim 1, wherein the supply amount of the thick brine is adjusted in accordance with change of the setting value of the electrolytic current under said control means when a changing factor of the electrolytic condition is the setting value of electrolytic current of the diluted brine.
